# FASCICULE DE BREVET EUROPEEN

(11) **EP 3 721 067 B1**
(45) Date de publication et mention de la délivrance du brevet: **27.09.2023**
(21) Numéro de dépôt: 18825764.6
(22) Date de dépôt: 06.12.2018
(51) Int. Cl.: F02C 7/24, G10K 11/16, G10K 11/172, B33Y 80/00, B33Y 70/00, B33Y 10/00, B33Y 40/00, B29C 64/314, B29C 64/118, B29C 70/38, B64D 33/02

(54) **PROCÉDÉ DE FABRICATION D'UN RÉSEAU ORDONNE DE CANAUX ACOUSTIQUES EN MATÉRIAU ABRADABLE**
VERFAHREN ZUR HERSTELLUNG EINES GEORDNETEN NETZWERKS AUS AKUSTISCHEN KANÄLEN AUS ABRIEBMATERIAL
METHOD FOR MANUFACTURING AN ORDERED NETWORK OF ACOUSTIC CHANNELS MADE OF ABRADABLE MATERIAL

(30) Priorité: 06.12.2017 FR 1761716; 06.12.2017 CA 2988223
(43) Date de publication de la demande: 14.10.2020
(73) Titulaire: Safran Aircraft Engines, 75015 Paris (FR)
(72) Inventeur: MARDJONO, Jacky, Novi, 77550 Moissy-Cramayel (FR); DUBOURG, Arnaud, MontreaL Québec H3W 1T5 (CA); FOTSING, Edith-Roland, Montreal Québec H3C 3A7 (CA); ROSS, Annie, Montreal Québec H3C 3A7 (CA)
(74) Mandataire: Cabinet Beau de Loménie
(86) Numéro de dépôt international: PCT/FR2018/053134
(87) Numéro de publication internationale: WO 2019/110939

(56) Documents cités:
- WO-A1-2011/061430
- GB-A- 2 484 350
- US-A1- 2015 030 803
- US-A1- 2016 271 872

## Description

### Arrière-plan de l'invention

La présente invention se rapporte au domaine général de la fabrication de pièces en matériaux polymères, notamment thermodurcissables, de pièces métalliques, en alliage métallique ou en céramique par fabrication additive et elle concerne plus particulièrement, mais non exclusivement, la fabrication d'un revêtement abradable de paroi de turbomachine telle qu'un turboréacteur d'avion.

Le contrôle des nuisances sonores dues aux avions aux alentours des aéroports est devenu en enjeu de santé public. Des normes et règlements de plus en plus sévères sont imposés aux fabricants d'avions et aux gestionnaires d'aéroports. Par conséquent, construire un avion silencieux est devenu au fil des années un argument de vente marquant. Actuellement, le bruit généré par les moteurs d'avions est atténué par des revêtements acoustiques à réaction localisée qui permettent de diminuer l'intensité sonore du moteur sur un ou deux octaves sur le principe des résonateurs de Helmholtz, ces revêtements se présentant classiquement sous la forme de panneaux composites composés d'une plaque rigide associée à une âme nid d'abeille recouverte d'une peau perforée et disposés au niveau de la nacelle ou des conduits de propagation amont et aval. Toutefois, dans les moteurs de nouvelle génération (par exemple dans les turbosoufflantes), les zones disponibles pour les revêtements acoustiques sont amenées à se réduire considérablement comme dans la technologie UHBR (Ultra-High-Bypass-Ratio).

Il est donc important de proposer des nouveaux procédés et/ou de nouveaux matériaux (notamment des matériaux poreux) permettant d'éliminer ou de réduire de façon significative le niveau de bruit produit généré par les moteurs d'avion surtout dans les phases de décollage et d'atterrissage et sur une gamme fréquentielle plus large qu'actuellement incluant les basses fréquences tout en conservant les performances du moteur. C'est la raison pour laquelle on cherche aujourd'hui de nouvelles surfaces de traitements acoustiques et ceci avec un impact minimal sur les autres fonctionnalités du moteur comme la consommation spécifique de carburant qui constitue un avantage commercial important.

Par ailleurs, il est aujourd'hui courant et avantageux d'avoir recours à des procédés de fabrication additive en lieu et place des procédés traditionnels de fonderie, de forge ou d'usinage dans la masse pour réaliser facilement, rapidement et à moindre coût des pièces tridimensionnelles complexes. Le domaine aéronautique se prête d'ailleurs particulièrement bien à l'utilisation de ces procédés. Parmi ceux-ci, on peut citer notamment le procédé de dépôt énergétique direct par fil (Wire Beam Deposition) ou encore les procédés décrits dans WO2011/061430, US2016/271872, US2015/030803 et GB2484350.

### Objet et résumé de l'invention

La présente invention a donc pour but de proposer une méthode de mise en forme d'un nouveau matériau, pouvant réduire de manière significative le bruit généré par les turboréacteurs d'avion. Le contrôle des paramètres du matériau permet une réduction du bruit sur une gamme allant des basses à des hautes fréquences. Les produits issus de cette méthode sont destinés à être montés sur une paroi d'un turboréacteur en contact avec un écoulement fluidique et plus particulièrement en lieu et place d'un cartouche d'abradable de carter de soufflante.

A cet effet, il est prévu un procédé de fabrication d'un revêtement abradable consistant à déposer sur une paroi de turbomachine un filament d'un matériau thermodurcissable tout en assurant à la fois un déplacement relatif entre ladite paroi et ledit filament selon une trajectoire de dépôt déterminée et une solidification dudit filament afin de créer un échafaudage tridimensionnel de filaments, constitué de couches superposées dont les filaments d'une couche donnée ne sont pas jointifs et peuvent être orientés différemment de ceux d'une couche adjacente, de sorte à lui conférer des propriétés d'absorption des ondes acoustiques caractérisé en ce que ledit matériau thermodurcissable est un mélange thixotrope dépourvu de solvant dont l'évaporation entrainerait un fort retrait et constitué d'une base polymère et d'un agent de réticulation dans un rapport pondéral de ladite base polymère à ledit agent de réticulation compris entre 1 :1 et 2 :1, et d'une gelée de pétrole présente entre 5 et 15% en poids du poids total dudit mélange thixotrope.

Ainsi, on obtient une microstructure poreuse à porosité régulière et ordonnée qui assure une absorption importante des ondes acoustiques par dissipation visco-thermique au sein des canaux tout en gardant sa nature abradable de par le matériau la constituant.

De préférence, ledit mélange thixotrope est obtenu par co-extrusion desdits composants dans une vis d'extrusion conique et déposé sur ladite paroi de turbomachine au moyen d'une buse d'éjection de forme et dimension calibrées dont la section de sortie présente une plus grande largeur inférieure à 250 microns.

Avantageusement, le déplacement relatif entre ladite paroi de turbomachine et ledit filament cylindrique est assuré par une machine trois axes au moins ou un robot commandé depuis un calculateur et la solidification dudit filament cylindrique est assurée par un élément de chauffage monté en sortie de ladite buse d'éjection calibrée.

Selon le mode de réalisation envisagé, ledit échafaudage tridimensionnel peut-être constitué :
- de couches superposées dont les filaments d'une couche donnée sont orientés alternativement à 0° ou à 90° sans décalage dans la superposition des filaments d'une même direction ;
- de couches superposées dont les filaments d'une couche donnée sont orientés alternativement à 0° ou à 90° présentant un décalage dans la superposition des filaments d'une même direction ;
- de couches superposées présentant des directions d'orientation des filaments Di décalées d'un même écart angulaire, compris entre 20° et 40°, typiquement de 30°, à chaque couche i ;
- ou encore de couches superposées de filaments présentant, pour chacune des couches, à la fois une orientation de filaments à 0° et une orientation de filaments à 90°, de façon à former des perforations verticales de sections carrées entre les filaments.

### Brève description des dessins

D'autres caractéristiques et avantages de la présente invention ressortiront de la description détaillée faite ci-dessous, en référence aux figures suivantes dépourvues de tout caractère limitatif et sur lesquelles :
- La figure 1 illustre en perspective éclatée le montage d'un échafaudage tridimensionnel de filaments de matériau abradable conforme à l'invention,
- La figure 2 illustre le système de dépôt de filaments pour la réalisation de l'échafaudage tridimensionnel de la figure 1, et
- Les figures 3A à 3D montrent quatre exemples d'échafaudages tridimensionnels ayant des propriétés acoustiques.

### Description détaillée de l'invention

Le procédé selon l'invention permet l'impression d'un matériau abradable sur une paroi de turbomachine dans le but de réaliser un échafaudage tridimensionnel de filaments formant entre eux un réseau ordonné de canaux ayant des propriétés acoustiques.

Par matériau abradable, on entend la capacité du matériau à se disloquer (ou s'éroder) en fonctionnement au contact d'une pièce en regard (faible résistance au cisaillement) et sa résistance à l'usure suite aux impacts de particules ou corps étrangers qu'il est amené à ingérer en fonctionnement (compromis avec abradabilité). Un tel matériau doit en outre garder voire favoriser de bonnes propriétés aérodynamiques (critère de rugosité : Ra sur état de surface), présenter des résistances à l'oxydation et à la corrosion suffisantes et un coefficient de dilatation thermique du même ordre que la couche ou la paroi sur laquelle il est déposé.

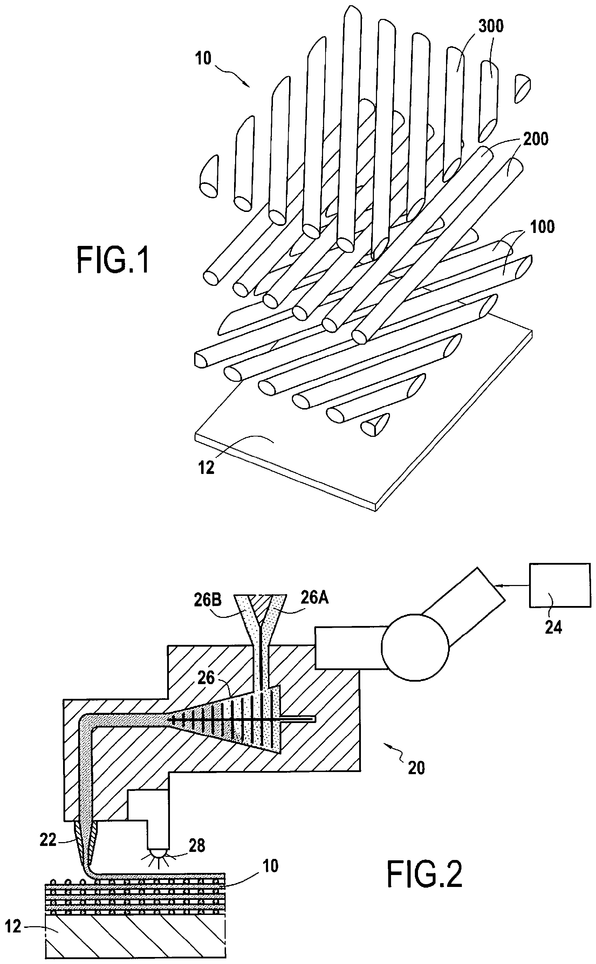

La figure 1 illustre en perspective éclatée une partie d'un échafaudage tridimensionnel 10 de filaments 100, 200, 300, avantageusement cylindriques, d'un matériau abradable permettant, conformément à l'invention, la réalisation d'un revêtement sous la forme d'un réseau ordonné de canaux de nature à conférer des propriétés acoustiques à une paroi (le substrat) 12 destinée à recevoir ce revêtement. Selon la configuration de réseau envisagé, des interconnections entre les canaux peuvent exister de manière régulière lors de la superposition des différentes couches du matériau abradable destinées à générer ces différents canaux. Cette paroi est une paroi d'une turbomachine telle qu'un turboréacteur d'avion et plus particulièrement un carter composite tissé 3D disposé en périphérie des aubes de soufflante et habituellement destiné à recevoir une cartouche d'abradable.

L'impression d'un tel réseau ordonné de canaux est effectuée par fabrication additive selon le procédé décrit ci-après en regard de la figure 2. Cette impression requiert des équipements de précision permettant de contrôler le dépôt du matériau abradable et assurer ainsi le tolérancement dimensionnel final. Il faut pour cela disposer au moins d'une machine 3 axes du type ABG10000 de Aerotech Incorporation ou d'un robot possédant des « axes numériques » de précision (positionnement de l'ordre de 5 microns) permettant via un logiciel approprié de commander l'impression selon une trajectoire de dépôt définie par l'utilisateur. Grâce à ces équipements, il est donc possible de garantir un dépôt précis de filaments dans un espace tridimensionnel déterminé, en contrôlant les paramètres d'impression tels que la vitesse d'écoulement du matériau, la position et vitesse de déplacement de l'impression.

Comme le montre la figure 2, un système de dépôt filamentaire, une machine 3 axes au moins ou un robot 20, vient déposer de préférence en liaison avec un circuit de contrôle en pression et température interne au système, le matériau abradable par extrusion via une buse d'éjection 22 de forme et dimension calibrées tout d'abord sur le substrat 12 puis successivement sur les différentes couches superposées créées à la suite jusqu'à l'obtention de l'épaisseur désirée. Le système de dépôt filamentaire suit une trajectoire de dépôt contrôlée par un calculateur (ordinateur ou microcontrôleur 24) auquel il est relié assurant la commande du système de dépôt filamentaire et contrôlant en tout point de la surface traitée à la fois l'arrangement filamentaire et la porosité du milieu nécessaires pour garantir l'abradabilité souhaitée.

L'alimentation en matériau abradable est assurée à partir d'une vis à extrusion conique 26 permettant de mélanger plusieurs composants pour former un mélange thixotrope ayant l'aspect d'une pâte. La vis d'extrusion conique qui comporte au moins deux entrées séparées 26A, 26B pour l'introduction simultanée d'au moins deux composants permet d'assurer un mélange adéquat et homogène des composants tout au long de l'opération de dépôt, pour obtenir in fine un matériau fluide à haute viscosité qui va être déposé par la buse d'éjection calibrée 22 dont la section de sortie dans sa plus grande largeur est inférieure à 250 microns. Durant cette opération, il faut éviter la génération de bulles d'air qui forment autant de défaut dans le filament lors de l'impression et il est donc nécessaire de pousser le matériau de manière très progressive tout en contrôlant la pression dans la buse d'éjection et sa vitesse de déplacement, de façon à obtenir un filament dont la section est uniforme et la position conforme. On notera que par un contrôle des composants introduits dans la vis à extrusion conique, il est possible de changer la constitution du matériau déposé.

Une lampe de chauffage 28 ou tout dispositif analogue peut être montée en sortie de la buse d'éjection 22 pour stabiliser le matériau déposé et éviter le fluage au cours du dépôt. Le dépôt du matériau abradable s'effectue jusqu'à une épaisseur spécifiée. Pour accélérer le dépôt du matériau, le système de dépôt filamentaire 20 peut comporter plusieurs buses ajustables de façon indépendante ou comporter une multi-buse de diamètre calibrée telle que celle décrite dans la demande US 2017/203566.

On obtient ainsi un dépôt contrôlé de matériau abradable dans l'épaisseur et en surface permettant de fonctionnaliser l'abradable notamment en vue de lui conférer des propriétés acoustiques.

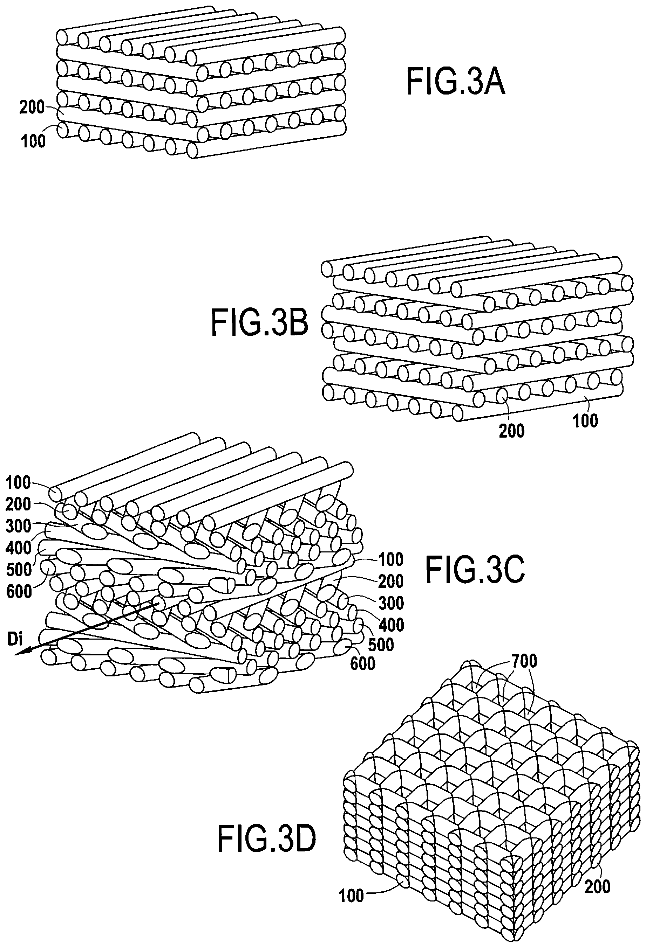

Pour cela, le réseau ordonné de canaux présente avantageusement un échafaudage ayant l'une des configurations illustrées aux figures 3A, 3B, 3C et 3D, à savoir :
Sur la figure 3A, un échafaudage tridimensionnel de filaments 100, 200 est constitué de couches superposées dont les filaments d'une couche donnée sont orientés alternativement à 0° ou à 90° sans décalage dans la superposition des filaments d'une même direction.

Sur la figure 3B, un échafaudage tridimensionnel de filaments 100, 200 est constitué de couches superposées dont les filaments d'une couche donnée sont orientés alternativement à 0° ou à 90° et présentent un décalage dans la superposition des filaments d'une même direction. Ce décalage est comme illustré de préférence égal à la moitié de la distance entre deux filaments.

On notera que pour ces deux configurations l'écart angulaire entre les deux directions de filaments peut être différent et inférieur à 90°, par exemple 45°.

Sur la figure 3C, un échafaudage tridimensionnel de filaments 100, 200, 300, 400, 500, 600 est constitué de couches superposées présentant des directions d'orientation des filaments Di décalées d'un même écart angulaire, compris entre 20° et 40°, typiquement de 30°, à chaque couche i (i compris entre 1 et 6 pour un écart angulaire de 30°).

Et sur la figure 3D, un échafaudage tridimensionnel de filaments 100, 200 est constitué de couches superposées de filaments présentant, pour chacune des couches, à la fois une orientation de filaments à 0° et une orientation de filaments à 90°, de façon à former des perforations verticales 700 de sections carrées entre les filaments. Dans chacune de ces quatre configurations, la porosité souhaitée (pourcentage de vide) est typiquement supérieure à 60%.

Une impression sur un secteur de carter avec ces différentes structures a montré la faisabilité d'un tel dépôt robotisé de matériau abradable selon le procédé précité de fabrication additive. Des tests de comportement mécanique en compression et flexion ont aussi été réalisés ainsi que des échantillons destinés à un test d'impact basse énergie ou à une caractérisation de l'impédance acoustique en incidence normale.

Notamment, il a été constaté une transmission de l'énergie acoustique au travers de l'échafaudage et une absorption d'une partie de cette énergie acoustique par modification des sources aéro-acoustique ou absorption des ondes sonores propagatrices.

Le matériau abardable extrudé par la ou les buses calibrées est avantageusement un matériau thermodurcissable à haute viscosité (dit aussi fluide) qui est dépourvu de solvant dont l'évaporation génère comme il est connu un fort retrait. Ce matériau est de préférence une résine à cinétique de polymérisation lente et écoulement filamentaire stable se présentant sous la forme d'un mélange thixotrope qui présente donc l'avantage d'un retrait beaucoup plus faible entre l'impression sur le substrat (juste après extrusion du matériau) et la structure finale (une fois chauffée et la polymérisation complète).

Un exemple de matériau abradable utilisé dans le cadre du procédé est un matériau se présentant sous forme pâteuse et constitué de trois composants à savoir une base polymère, par exemple une résine époxyde (se présentant comme une pâte à modeler bleue), un agent de réticulation ou accélérateur (se présentant comme une pâte à modeler blanche) et une gelée de pétrole de couleur translucide (par exemple de la vaseline^{™}). Les composants accélérateur/base sont répartis selon un rapport pondéral de la base à l'accélérateur compris entre 1:1 et 2:1 et la gelée de pétrole présente entre 5 et 15% (typiquement 10%) en poids du poids total du matériau. La base peut en outre comporter des microsphères de verres creuses d'un diamètre déterminé pour assurer la porosité désirée tout en permettant d'accroitre les performances mécaniques de l'échafaudage imprimé. L'intérêt de l'introduction de la gelée de pétrole réside dans la réduction de la viscosité de la résine ainsi que de la cinétique de réaction de l'abradable, ce qui rend sa viscosité plus stable durant le temps de l'impression. (La viscosité est directement liée à la pression d'extrusion nécessaire pour assurer la vitesse d'extrusion adéquate pour conserver la qualité de l'impression).

A titre d'exemple, un tel rapport de 2 :1 donne un matériau abradable comprenant 0.7g d'accélérateur et 1.4g de base, auquel il convient d'ajouter 0.2g de gelée de pétrole.

Ainsi la présente invention permet une impression rapide (30mm/s) et stable permettant de reproduire efficacement des structures acoustiques performantes contrôlées (rugosité, aspect, taux d'ouverture) ayant une faible taille de filament (<250 microns de diamètre) et un faible poids (taux de porosité amélioré > 60%) particulièrement intéressantes aux vues des contraintes fortes rencontrées en aéronautique.

## Revendications

1. Procédé de fabrication d'un revêtement abradable consistant à déposer sur une paroi de turbomachine (12) un filament (100, 200, 300) d'un matériau thermodurcissable tout en assurant à la fois un déplacement relatif entre ladite paroi de turbomachine et ledit filament selon une trajectoire de dépôt déterminée et une solidification dudit filament afin de créer un échafaudage tridimensionnel de filaments constitué de couches superposées dont les filaments d'une couche donnée ne sont pas jointifs et peuvent être orientés différemment de ceux d'une couche adjacente, de sorte à lui conférer des propriétés d'absorption des ondes acoustiques, **caractérisé en ce que** ledit matériau thermodurcissable est un mélange thixotrope dépourvu de solvant dont l'évaporation entrainerait un fort retrait et constitué d'une base polymère et d'un agent de réticulation dans un rapport pondéral de ladite base polymère à ledit agent de réticulation compris entre 1 :1 et 2 :1, et d'une gelée de pétrole présente entre 5 et 15% en poids du poids total dudit mélange thixotrope.

2. Procédé de fabrication selon la revendication 1, **caractérisé en ce que** ledit mélange thixotrope est obtenu par co-extrusion desdits composants dans une vis d'extrusion conique (26) et déposé sur ladite paroi de turbomachine (12) au moyen d'une buse d'éjection de forme et dimension calibrées (22) dont la section de sortie présente une plus grande largeur inférieure à 250 microns.

3. Procédé de fabrication selon la revendication 1 ou la revendication 2, **caractérisé en ce que** le déplacement relatif entre ladite paroi de turbomachine et ledit filament est assuré par une machine trois axes au moins ou un robot (20) commandé depuis un calculateur (24).

4. Procédé de fabrication selon l'une quelconque des revendications 1 à 3, **caractérisé en ce que** la solidification dudit filament est assurée par un élément de chauffage (28) monté en sortie de ladite buse d'éjection calibrée.

5. Procédé de fabrication selon l'une quelconque des revendications 1 à 4, **caractérisé en ce que** ledit échafaudage tridimensionnel de filaments est constitué de couches superposées dont les filaments d'une couche donnée (100, 200) sont orientés alternativement à 0° ou à 90° sans décalage dans la superposition des filaments d'une même direction.

6. Procédé de fabrication selon l'une quelconque des revendications 1 à 4, **caractérisé en ce que** ledit échafaudage tridimensionnel de filaments est constitué de couches superposées dont les filaments d'une couche donnée (100, 200) sont orientés alternativement à 0° ou à 90° et présentent un décalage dans la superposition des filaments d'une même direction.

7. Procédé de fabrication selon l'une quelconque des revendications 1 à 4, **caractérisé en ce que** ledit échafaudage tridimensionnel de filaments est constitué de couches superposées de filaments (100, 200, 300, 400, 500, 600) présentant des directions d'orientation des filaments Di décalées d'un même écart angulaire, compris entre 20° et 40°, typiquement de 30°, à chaque couche i.

8. Procédé de fabrication selon l'une quelconque des revendications 1 à 4, **caractérisé en ce que** ledit échafaudage tridimensionnel de filaments est constitué de couches superposées de filaments (100, 200) présentant, pour chacune des couches, à la fois une orientation de filaments à 0° et une orientation de filaments à 90°, de façon à former des perforations verticales (700) de sections carrées entre les filaments.

## Patentansprüche

1. Verfahren zur Herstellung einer abreibbaren Verkleidung, das darin besteht, auf einer Wand einer Turbomaschine (12) ein Filament (100, 200, 300) aus einem wärmehärtbaren Material abzulegen, wobei gleichzeitig eine relative Bewegung zwischen der Wand der Turbomaschine und dem Filament gemäß einer bestimmten Ablagebahn und eine Verfestigung des Filaments sichergestellt werden, um ein dreidimensionales Gerüst aus Filamenten zu schaffen, das aus überlagerten Schichten gebildet wird, wobei die Filamente einer gegebenen Schicht nicht aneinander anliegen und unterschiedlich zu solchen einer benachbarten Schicht orientiert sein können, auf solche Weise, um ihr Eigenschaften zur Absorption von Schallwellen zu verleihen, **dadurch gekennzeichnet, dass** das wärmehärtbare Material eine thixotrope Mischung ist, die frei von Lösungsmittel ist, dessen Verdampfung eine starke Schrumpfung mit sich bringen würde, und das aus einer Polymerbasis und einem Vernetzungsmittel in einem Gewichtsverhältnis der Polymerbasis zu dem Vernetzungsmittel zwischen 1 :1 und 2:1, und aus einer vorhandenen Vaseline mit zwischen 5 und 15 Gew.-% des Gesamtgewichts der thixotropen Mischung gebildet wird.

2. Verfahren zur Herstellung nach Anspruch 1, **dadurch gekennzeichnet, dass** die thixotrope Mischung durch Koextrusion der Komponenten in einer konischen Extruderschnecke (26) erhalten wird und auf der Wand der Turbomaschine (12) mittels einer Auswurfdüse mit kalibrierter Form und Dimension (22) abgelegt wird, deren Ausgangsquerschnitt eine größte Breite von weniger als 250 Mikron aufweist.

3. Verfahren zur Herstellung nach Anspruch 1 oder Anspruch 2, **dadurch gekennzeichnet, dass** die relative Bewegung zwischen der Wand der Turbomaschine und dem Filament durch eine Maschine mit zumindest drei Achsen oder einem Roboter (20), der von einem Rechner (24) aus gesteuert wird, sichergestellt wird.

4. Verfahren zur Herstellung nach einem der Ansprüche 1 bis 3, **dadurch gekennzeichnet, dass** die Verfestigung des Filaments durch ein Heizelement (28) sichergestellt wird, das am Ausgang der kalibrierten Auswurfdüse montiert ist.

5. Verfahren zur Herstellung nach einem der Ansprüche 1 bis 4, **dadurch gekennzeichnet, dass** das dreidimensionale Gerüst aus Filamenten aus überlagerten Schichten gebildet wird, wobei die Filamente einer gegebenen Schicht (100, 200) abwechselnd in 0° oder in 90° ohne Versatz in der Überlagerung der Filamente einer selben Richtung orientiert sind.

6. Verfahren zur Herstellung nach einem der Ansprüche 1 bis 4, **dadurch gekennzeichnet, dass** das dreidimensionale Gerüst aus Filamenten aus überlagerten Schichten gebildet wird, wobei die Filamente einer gegebenen Schicht (100, 200) abwechselnd in 0° oder in 90° orientiert sind und einen Versatz in der Überlagerung der Filamente einer selben Richtung aufweisen.

7. Verfahren zur Herstellung nach einem der Ansprüche 1 bis 4, **dadurch gekennzeichnet, dass** das dreidimensionale Gerüst aus Filamenten aus überlagerten Schichten von Filamenten (100, 200, 300, 400, 500, 600) gebildet wird, die Orientierungsrichtungen von Filamenten Di aufweisen, die um einen selben Winkelabstand von zwischen 20° und 40°, in der Regel von 30°, zu jeder Schicht i versetzt sind.

8. Verfahren zur Herstellung nach einem der Ansprüche 1 bis 4, **dadurch gekennzeichnet, dass** das dreidimensionale Gerüst aus Filamenten aus überlagerten Schichten von Filamenten (100, 200) gebildet wird, die für jede der Schichten gleichzeitig eine Orientierung von Filamenten in 0° und eine Orientierung von Filamenten in 90° aufweisen, auf eine Weise, um vertikale Perforierungen (700) mit quadratischem Querschnitt zwischen den Filamenten zu bilden.

## Claims

1. Manufacturing method of an abradable coating consisting of depositing on a substrate surface (12) a filament (100, 200, 300) of a thermosetting material while providing both a relative displacement between said substrate and said filament along a predetermined deposition path and solidification of said filament in order to create a three-dimensional scaffold of filaments, consisting of superimposed layers of which the filaments of a given layer are not contiguous and can be oriented differently from those of an adjacent layer, so as to confer upon it acoustic wave absorption properties, **characterized in that** said thermosetting material is a thixotropic mixture free of solvent, the evaporation of which generates strong shrinkage, and consisting of a polymer base and of a cross-linking agent in a weight ratio of said polymer base to said cross-linking agent comprised between 1:1 and 2:1, and of a petroleum jelly present between 5 and 15% by weight of the total weight of said thixotropic mixture.

2. The manufacturing method according to claim 1, **characterized in that** said thixotropic mixture is obtained by co-extrusion of said components in a conical extrusion screw (26) and deposited on said substrate surface (12) by means of an ejection nozzle with calibrated shape and dimensions (22), the output cross section of which has a major width less than 250 microns.

3. The manufacturing method according to claim 1 or claim 2, **characterized in that** the relative displacement between said substrate and said filament is provided by a machine with at least three axes or a robot (20) controlled from a computer (24).

4. The manufacturing method according to any one of claims 1 to 3, **characterized in that** the solidification of said filament is provided by a heating element (28) mounted at the output of said calibrated ejection nozzle.

5. The manufacturing method according to any one of claims 1 to 4, **characterized in that** said three-dimensional scaffold of filaments consists of superimposed layers of which the filaments of a given layer (100, 200) are oriented alternately at 0° or at 90°, with no offset in the superimposition of filaments of the same direction.

6. The manufacturing method according to any one of claims 1 to 4, **characterized in that** said three-dimensional scaffolding of filaments consists of superimposed layers of which the filaments of a given layer (100, 200) are oriented alternately at 0° or at 90° and have an offset in the superimposition of filaments of the same direction.

7. The manufacturing method according to any one of claims 1 to 4, **characterized in that** said three-dimensional scaffold of filaments consists of superimposed layers of filaments (100, 200, 300, 400, 500, 600) having orientation directions of the filaments Di offset by the same angular deviation, comprised between 20° and 40°, typically 30°, at each layer i.

8. The manufacturing method according to any one of claims 1 to 4, **characterized in that** said three-dimensional scaffold of filaments consists of superimposed layers of filaments (100, 200) having, for each of the layers, both an orientation of filaments at 0° and an orientation of filaments at 90°, so as to form vertical perforations (700) with square cross sections between the filaments.
